# EUROPÄISCHE PATENTSCHRIFT

(11) **EP 3 894 827 B1**
(45) Veröffentlichungstag und Bekanntmachung des Hinweises auf die Patenterteilung: **25.09.2024**
(21) Anmeldenummer: 19817651.3
(22) Anmeldetag: 06.12.2019
(51) Int. Cl.: G01M 99/00, G01N 3/04, G01N 3/08

(54) **BEFESTIGUNGSANORDNUNG ZUM BEFESTIGEN EINES PROBENHALTERS AN EINER KRAFTMESSEINRICHTUNG, PROBENHALTER UND GEGENHALTER FÜR EINE SOLCHE BEFESTIGUNGSANORDNUNG, UND KRAFTMESSEINRICHTUNG MIT EINER SOLCHEN BEFESTIGUNGSANORDNUNG**
FASTENING ARRANGEMENT FOR FASTENING A SAMPLE HOLDER TO A FORCE MEASUREMENT DEVICE, SAMPLE HOLDER AND COUNTERPART HOLDER FOR A FASTENING ARRANGEMENT OF SAID TYPE, AND FORCE MEASUREMENT DEVICE HAVING A FASTENING ARRANGEMENT OF SAID TYPE
SYSTÈME DE FIXATION POUR FIXER UN PORTE-ÉCHANTILLON SUR UN DISPOSITIF DE MESURE DE FORCE, PORTE-ÉCHANTILLON ET SUPPORT ANTAGONISTE POUR UN SYSTÈME DE FIXATION DE CE TYPE, ET DISPOSITIF DE MESURE DE FORCE DOTÉ D'UN TEL SYSTÈME DE FIXATION

(30) Priorität: 10.12.2018 DE 102018221334
(43) Veröffentlichungstag der Anmeldung: 20.10.2021
(73) Patentinhaber: Vetter Pharma-Fertigung GmbH & Co. KG, 88212 Ravensburg (DE)
(72) Erfinder: WOLFF, Michael, 88167 Gestratz (DE)
(74) Vertreter: Kordel, Mattias
(86) Internationale Anmeldenummer: PCT/EP2019/083946
(87) Internationale Veröffentlichungsnummer: WO 2020/120304

(56) Entgegenhaltungen:
- DE-A1- 102006 022 711
- DE-U1- 20 106 760
- KR-A- 20080 039 087

## Beschreibung

Die Erfindung betrifft eine Befestigungsanordnung zum Befestigen eines Probenhalters an einer Kraftmesseinrichtung, eine Kraftmesseinrichtung mit einer solchen Befestigungsanordnung, sowie einen Probenhalter und einen Gegenhalter für eine solche Befestigungsanordnung.

Kraftmesseinrichtungen der hier angesprochenen Art werden insbesondere verwendet, um Zug- und/oder Druckprüfungen, insbesondere an medizinischen Hohlkörpern, vorzunehmen. So kann mittels solcher Kraftmesseinrichtungen beispielsweise eine Gleitkraft und/oder Dichtigkeit eines verlagerbaren Kolbens in einem medizinischen Hohlkörper insbesondere anhand der zur Verlagerung des Kolbens nötigen Druckkraft bestimmt werden, wobei insbesondere auch geprüft werden kann, ob eine ausreichende oder eventuell eine zu große Menge an Silikon oder einem anderen Gleitmittel appliziert ist. Weiterhin können Stabilität, Montagekraft, Bruchkraft, Torsionswiderstand und andere Eigenschaften, insbesondere bei medizinischen Hohlkörpern, geprüft werden. Eine derartige Kraftmesseinrichtung weist typischerweise einen Basiskörper, insbesondere mit einer Basisplatte, sowie einen an dem Basiskörper, insbesondere auf der Basisplatte angeordneten Kraftmessturm auf, wobei ein Probenhalter lagefest an dem Basiskörper, insbesondere auf der Basisplatte, angeordnet werden kann, und wobei ein Prüfelement an einem entlang der Höhe des Kraftmessturms verlagerbaren Schlitten anordenbar ist. Zur Kraftmessung, insbesondere Zug- und/oder Druckmessung, wird das Prüfelement auf dem Schlitten relativ zu dem Probenhalter und insbesondere einer an dem Probenhalter angeordneten Probe entlang der Hochrichtung des Kraftmessturms verlagert oder zumindest in Verlagerungsrichtung - entweder in Zug- oder Druckrichtung - mit einer Kraft beaufschlagt. Die Kraft wird - insbesondere zeitabhängig - erfasst. Aus einem zeitlichen Kraftverlauf und/oder einem über eine Verlagerungsstrecke des Schlittens aufgetragen Kraftverlauf können dann Informationen über die Probe erhalten werden.

Um reproduzierbare und relevante Ergebnisse zu erhalten, ist es nötig, dass die Probe und der Verlagerungsweg des Schlittens, insbesondere also die Hochrichtung des Kraftmessturms, exakt parallel zueinander ausgerichtet sind. Insbesondere darf zwischen dem Prüfelement und der Probe weder ein Parallelversatz noch ein Winkelversatz vorhanden sein, wenn die Messergebnisse aussagekräftig sein sollen.

Derzeitige, kommerziell erhältliche Probenhalter und Befestigungen für diese sind weder speziell auf medizinische Hohlkörper eingerichtet noch in der Lage, deren Orientierung relativ zu der Hochachse des Kraftmessturms mit hoher Präzision und Reproduzierbarkeit zu gewährleisten. Dies gilt ganz besonders bei einem Wechsel der Proben oder des Probenhalters. Aufgrund ihrer länglichen Ausgestaltung erfordern gerade Spritzen oder Karpulen eine besonders hohe Genauigkeit, mit der deren Längsachse parallel zur Hochrichtung des Kraftmessturms ausgerichtet sein muss. Dies gilt umso mehr, wenn mehrere Proben nebeneinander an ein und derselben Kraftmesseinrichtung geprüft werden sollen.

Weiterhin besteht auf dem Gebiet der medizinischen Hohlkörper Bedarf an der Möglichkeit, verschiedene Hohlkörper mit einer Kraftmesseinrichtung prüfen zu können, wobei ein Wechsel zwischen verschiedenen Arten medizinischer Hohlkörper, aber auch ein Wechsel zwischen verschiedenen Proben gleicher Hohlkörper schnell, einfach und trotzdem mit hoher Genauigkeit erfolgen soll. Zugleich soll eine derartige Anordnung standardisierbar sein.

DE 201 06 760 U1 offenbart eine Prüfeinrichtung für Zugversuche zur Bestimmung der Festigkeit eines Flächengebildes senkrecht zu dessen Ebene, insbesondere eines Blattes aus Papier, Pappe oder dergleichen, mit einer ersten Platte und einer zweiten Platte und mindestens einem, der ersten Platte oder der zweiten Platte zugeordneten Stempel.

KR 2008 0039087 A offenbart eine Vorrichtung zum Befestigen von Proben in einer Ermüdungsprüfmaschine.

DE 10 2006 022711 A1 offenbart ein Zugkraftmessgerät für die Festigkeitsprüfung an konfektionierten, mit Anschlusselementen versehenen Kabeln.

Der Erfindung liegt daher die Aufgabe zugrunde, eine Befestigungsanordnung zum Befestigen eines Probenhalters an einer Kraftmesseinrichtung, eine Kraftmesseinrichtung mit einer solchen Befestigungsanordnung, sowie einen Probenhalter und einen Gegenhalter für eine solche Befestigungsanordnung zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Befestigungsanordnung zum Befestigen eines Probenhalters an einer Kraftmesseinrichtung geschaffen wird, die einen Probenhalter sowie einen kraftmesseinrichtungsseitigen Gegenhalter aufweist. Der Gegenhalter ist an der Kraftmesseinrichtung ausgebildet oder angeordnet, oder fest mit der Kraftmesseinrichtung verbindbar. Weiterhin weist der Gegenhalter wenigstens eine Probenhalteraufnahme auf. Der Probenhalter weist eine plane Anlagefläche auf. Die Probenhalteraufnahme weist eine plane Gegenanlagefläche auf. Insbesondere sind die plane Anlagefläche und die plane Gegenanlagefläche zur flächigen Anlage aneinander, insbesondere zur vollflächigen Anlage aneinander, eingerichtet und insbesondere aufeinander abgestimmt. Der Probenhalter weist weiter wenigstens ein Positionierelement und ein Fixierelement auf, während die Probenhalteraufnahme wenigstens ein Gegenpositionierelement und ein Gegenfixierelement aufweisen. Das Positionierelement und das Gegenpositionierelement sind eingerichtet - und insbesondere aufeinander abgestimmt -, um eine Relativposition zwischen dem Probenhalter und dem Gegenhalter zusammen mit der Anlagefläche und der Gegenanlagefläche eindeutig festzulegen, insbesondere wenn die Anlagefläche an der Gegenanlagefläche anliegt. Das Fixierelement und das Gegenfixierelement sind eingerichtet und insbesondere aufeinander abgestimmt, um den Probenhalter und den Gegenhalter aneinander zu halten, sowie die Anlagefläche und die Gegenanlagefläche gegeneinander zu drängen. Auf diese Weise kann eine hochgenaue, reproduzierbare und schnell lös- sowie arretierbare Verbindung des Probenhalters an dem Gegenhalter geschaffen werden. Insbesondere wird eine Relativposition einer an dem Probenhalter gehaltenen Probe relativ zu dem kraftmesseinrichtungsseitigen Gegenhalter und damit auch zu der Kraftmesseinrichtung, insbesondere zu einer Hochachse eines Kraftmessturms der Kraftmesseinrichtung, über die Anlage der Anlagefläche an der Gegenanlagefläche einerseits und das Zusammenwirken des Positionierelements mit dem Gegenpositionierelement andererseits bewirkt. Indem dabei das Fixierelement und das Gegenfixierelement den Probenhalter und den Gegenhalter aneinander halten, wird deren Relativlage zueinander fixiert.

Die Anlagefläche und die Gegenanlagefläche sind insbesondere korrespondierend zueinander und/oder komplementär zueinander ausgebildet, sodass sie satt und vollflächig aneinander anliegen können.

Das Positionierelement und das Gegenpositionierelement sind vorzugsweise so aufeinander abgestimmt, dass sie miteinander korrespondieren, wobei sie insbesondere komplementär zueinander ausgebildet sind.

Das Fixierelement und das Gegenfixierelement sind vorzugsweise so aufeinander abgestimmt, dass sie miteinander korrespondieren. Insbesondere sind das Fixierelement und das Gegenfixierelement bevorzugt komplementär zueinander ausgebildet.

Das Fixierelement und das Gegenfixierelement sind insbesondere eingerichtet, um die Anlagefläche und die Gegenanlagefläche fest, insbesondere ohne Spalt gegeneinander zu drängen, sodass diese satt und insbesondere vollflächig aneinander anliegen.

Das Fixerelement und das Gegenfixierelement sind insbesondere eingerichtet, um den Probenhalter und den Gegenhalter in der eindeutig festgelegten Relativposition zu halten.

Unter einer Relativposition wird hier insbesondere eine dreidimensionale Position im Raum verstanden, welche der Probenhalter und der Gegenhalter relativ zueinander einnehmen. Insbesondere wird unter einer eindeutig festgelegten Relativposition eine relative Lage im Raum verstanden, bei der alle Bewegungsfreiheitsgrade festgelegt sind, sodass weder eine translatorische noch eine rotatorische Relativbewegung zwischen dem Gegenhalter und dem Probenhalter mehr möglich ist. Vielmehr ist deren Relativlage zueinander im Raum eindeutig bestimmt.

Insbesondere werden durch die plane, vorzugsweise vollflächige Anlage der Anlagefläche und der Gegenanlagefläche aneinander ein Translationsfreiheitsgrad, insbesondere senkrecht zu der Anlagefläche und der Gegenanlagefläche, sowie zwei Rotationsfreiheitsgrade festgelegt. Durch das Zusammenwirken des Positionierelements mit dem Gegenpositionierelement werden bevorzugt der verbleibende Rotationsfreiheitsgrad sowie die beiden verbleibenden Translationsfreiheitsgrade festgelegt.

Vorzugsweise dienen das Fixierelement und das Gegenfixierelement nicht - zumindest nicht primär - zum Festlegen eines Freiheitsgrads, sondern dazu, die Anordnung des Probenhalters und des Gegenhalters in der festgelegten Relativposition zu fixieren oder arretieren. Die Funktionstrennung zwischen der Definition der Relativposition über die Anlagefläche, die Gegenanlagefläche, das wenigstens eine Positionierelement und das wenigstens eine Gegenpositionierelement einerseits, sowie die Fixierung/Arretierung durch das Fixierelement und das Gegenfixierelement andererseits ermöglicht eine besonders genaue und reproduzierbare Bestimmung der Relativlage, wobei zugleich eine einfache Lösbarkeit und Verriegelbarkeit des Probenhalters an dem Gegenhalter und damit eine schnelle Auswechselbarkeit verschiedener Probenhalter gewährleistet wird.

Der Gegenhalter ist vorzugsweise fest, insbesondere lagefest, besonders bevorzugt dauerhaft, mit der Kraftmesseinrichtung verbunden. Insbesondere ist der Gegenhalter bevorzugt fest, insbesondere lagefest, bevorzugt dauerhaft, mit dem Basiskörper verbunden, insbesondere auf der Basisplatte angeordnet. Somit ist insbesondere eine Relativlage zwischen dem Gegenhalter und dem Kraftmessturm definiert und genau festgelegt, wobei der Probenhalter wiederum präzise und reproduzierbar an dem Gegenhalter angeordnet werden kann, sodass auch dessen Relativlage zu dem Kraftmessturm reproduzierbar und mit hoher Genauigkeit festlegbar ist.

Unter einem Probenhalter wird hier sowohl ein Halter verstanden, der eingerichtet ist, um eine Probe im engeren Sinn, beispielsweise einen medizinischen Hohlkörper, zu halten, andererseits kann der Probenhalter aber auch eine Kalibriereinrichtung oder ein Halter für eine Kalibriereinrichtung sein, wobei die Kalibriereinrichtung eingerichtet ist, um die Kraftmesseinrichtung zu kalibrieren. Eine solche Kalibriereinrichtung kann dann in reproduzierbarer und einfacher Weise statt einer Probe an dem Gegenhalter angeordnet werden, sodass eine reproduzierbare, einfache und schnelle Kalibrierung der Kraftmesseinrichtung möglich ist.

Besonders bevorzugt sind der Probenhalter und der Gegenhalter so aufeinander abgestimmt, insbesondere sind die plane Anlagefläche und die plane Gegenanlagefläche, das wenigstens eine Positionierelement und das wenigstens eine Gegenpositionierelement, sowie das Fixierelement und das Gegenfixierelement, so aufeinander abgestimmt, dass der Probenhalter mit dem Gegenhalter durch eine einfache Bewegung in einer Richtung, insbesondere also durch eine eindimensionale Bewegung, verbunden werden kann. Insbesondere ist durch eine einfache, eindimensionale Bewegung ein Verrasten oder Anclipsen des Probenhalters an dem Gegenhalter möglich, sodass das Fixierelement und das Gegenfixierelement ineinandergreifen oder miteinander verriegeln, um den Probenhalter an dem Gegenhalter zu halten. Auch das Lösen des Probenhalters von dem Gegenhalter kann bevorzugt mittels einer einfachen, insbesondere eindimensionalen Bewegung erfolgen. Auf diese Weise ist ein besonders schnelles Anordnen des Probenhalters an dem Gegenhalter sowie ein schnelles Abnehmen des Probenhalters von dem Gegenhalter möglich, sodass insbesondere verschiedene Proben und/oder Kalibriereinrichtungen nacheinander an dem Gegenhalter angeordnet, mithin ausgewechselt werden können.

Gemäß einer Weiterbildung der Erfindung ist vorgesehen, dass das wenigstens eine Positionierelement ein Passstift ist, wobei das wenigstens eine Gegenpositionierelement eine Passbohrung ist. Auf diese Weise kann das als Passstift ausgebildet Positionierelement in das als Passbohrung ausgebildete Gegenpositionierelement eingreifen. Auch eine umgekehrte Ausgestaltung ist möglich, wobei dann das Positionierelement als Passbohrung und das Gegenpositionierelement als Passstift ausgebildet sind. Indem der Passstift in die Passbohrung eingreift, können zwei Translationsfreiheitsgrade senkrecht zu der Einsteckrichtung des Passstifts in die Passbohrung festgelegt werden. Das Positionierelement und das Gegenpositionierelement sind vorzugsweise außermittig - insbesondere relativ zu dem Fixierelement und/oder dem Gegenfixierelement - an dem Probenhalter beziehungsweise dem Gegenhalter angeordnet, sodass durch das Eingreifen des Passstifts in die Passbohrung auch ein Rotationsfreiheitsgrad festlegbar ist.

Gemäß einer Weiterbildung der Erfindung ist vorgesehen, dass der Probenhalter als das wenigstens eine Positionierelement ein erstes Positionierelement und ein zweites Positionierelement aufweist. Die Probenhalteraufnahme weist bevorzugt als das wenigstens eine Gegenpositionierelement ein erstes Gegenpositionierelement und ein zweites Gegenpositionierelement auf. Gemäß einer Ausgestaltung ist bevorzugt das erste Positionierelement als Rundstift und das zweite Positionierelement als Flachsstift oder Schwertstift ausgebildet. In diesem Fall sind vorzugsweise beide Gegenpositionierelemente als Passbohrungen ausgebildet, die insbesondere eingerichtet sind, sodass das ihnen jeweils zugeordnete Positionierelement passgenau in die jeweilige Passbohrung eingreifen kann. Es ist auch möglich, dass das erste Gegenpositionierelement als Rundstift und das zweite Gegenpositionierelement als Schwertstift oder Flachstift ausgebildet ist; entsprechend sind dann bevorzugt die Positionierelemente jeweils als entsprechende Passbohrungen ausgebildet. Es ist aber auch möglich, dass eines der beiden Positionierelemente als Rundstift, oder als Schwert- oder Flachstift ausgebildet ist, wobei das andere der Positionierelemente als Passbohrung ausgebildet ist. Entsprechend ist dann eines der Gegenpositionierelemente als Passbohrung ausgebildet, wobei das andere der Gegenpositionierelemente als Schwertstift oder Flachstift, oder als Rundstift ausgebildet ist, abhängig davon, wie das entsprechende Positionierelement ausgebildet ist: Ist das entsprechende Positionierelement als Rundstift ausgebildet, ist das Gegenpositionierelement als Flach- oder Schwertstift ausgebildet; ist umgekehrt das Positionierelement als Schwert- oder Flachstift ausgebildet, ist das entsprechende Gegenpositionierelement als Rundstift ausgebildet. Jedenfalls werden so ein in eine erste Passbohrung eingreifender Rundstift und ein in eine zweite Passbohrung eingreifender Flach- oder Schwertstift miteinander kombiniert, um die Relativposition zwischen dem Probenhalter und dem Gegenhalter festzulegen.

Unter einem Rundstift wird dabei ein Stift verstanden, der einen kreiszylindrischen Schaft aufweist. Es ist möglich, dass der Rundstift einen konischen oder abgeschrägten Einführabschnitt zum leichteren Einführen in die Passbohrung aufweist. Unter einem Schwert- oder Flachstift wird ein Stift verstanden, dessen Ausdehnung entlang einer ersten Richtung senkrecht zur Steckrichtung größer ist als entlang einer senkrecht zu der ersten Richtung angeordneten, zweiten Richtung, die ebenfalls senkrecht zur Steckrichtung orientiert ist. Mittels des Rundstifts können somit zwei Translationsfreiheitsgrade senkrecht zur Steckrichtung festgelegt werden, während mittels des Schwert- oder Flachstifts ein Translationsfreiheitsgrad festgelegt werden kann. Gemeinsam legen die vorzugweise außermittig - insbesondere relativ zu dem Fixierelement und/oder dem Gegenfixierelement - angeordneten beiden Positionierelemente mit den entsprechenden Gegenpositionierelementen einen Rotationsfreiheitsgrad fest. Dass der Schwert- oder Flachstift entlang einer Richtung abgeflacht ist und somit in dieser Richtung einen Spalt zu einer Innenwandung der Passbohrung freilässt, hilft insbesondere, eine Überbestimmung der Relativlage zwischen dem Probenhalter und dem Gegenhalter zu vermeiden.

Vorzugsweise weist auch der Schwert- oder Flachstift eine Einführschräge oder einen konischen Einführabschnitt auf, um das Einführen in die entsprechende Passbohrung zu erleichtern. Die Passbohrung ist vorzugsweise als Zylinderbohrung ausgebildet. Insbesondere kann die Passbohrung für den Schwert- oder Flachstift bezüglich ihrer Maße identisch ausgebildet sein zu der Passbohrung für den Rundstift. Aufgrund der Abflachung entlang einer Richtung liegt der Flach- oder Schwertstift dann - im Unterschied zu dem Rundstift - aber nur entlang einer Richtung oder Achse an der Innenwandung der Passbohrung an.

Gemäß einer Weiterbildung der Erfindung ist vorgesehen, dass das Fixierelement als Zughaken und das Gegenfixierelement als Rastaussparung ausgebildet sind. Es ist umgekehrt auch möglich, dass das Gegenfixierelement als Zughaken ausgebildet ist, wobei dann das Fixierelement als Rastaussparung ausgebildet ist. Mittels eines in eine Rastaussparung eingreifenden Zughakens ist eine einfache und schnelle Fixierung und Arretierung des Probenhalters an dem Gegenhalter möglich.

Der Zughaken weist vorzugsweise eine Einführschräge, besonders bevorzugt einen konischen Einführabschnitt zum leichten Einführen des Zughakens in die Rastaussparung auf. Alternativ oder zusätzlich weist der Zughaken bevorzugt eine Anlaufschräge auf, die - analog zur Funktionsweise eines Keilgetriebes - dazu dient, den Zughaken in die Rastaussparung einzuziehen.

Gemäß einer Weiterbildung der Erfindung ist vorgesehen, dass die Rastaussparung ein in eine Rastposition vorgespanntes Rastelement aufweist. Die Einführschräge des Zughakens ist bevorzugt abgestimmt, um das Rastelement entgegen der Vorspannung in eine Löseposition zu drängen, wenn der Zughaken in die Rastaussparung eingeführt wird. In der Rastposition rastet bei in die Rastaussparung eingeführtem Zughaken das Rastelement vorzugsweise in eine Verriegelungsausnehmung des Zughakens ein. Dabei ist die Anlaufschräge des Zughakens bevorzugt an einer Wandung der Verriegelungsausnehmung derart ausgebildet, dass das Rastelement bei seiner Verlagerung in die Rastposition aufgrund seiner Vorspannung an der Anlaufschräge abläuft und dabei den Zughaken in die Rastaussparung hineinzieht.

Um den Zughaken zu lösen, kann das Rastelement bevorzugt gegen die Vorspannung aus der Rastposition in eine Löseposition verlagert werden. Der Zughaken kann dann aus der Rastaussparung entnommen werden.

Gemäß der Erfindung ist vorgesehen, dass der Probenhalter wenigstens eine Probenaufnahme, vorzugsweise genau eine Probenaufnahme oder eine Mehrzahl von Probenaufnahmen, aufweist. Die Probenaufnahme ist eingerichtet, um eine Probe, insbesondere einen medizinischen Hohlkörper oder eine Kalibriereinrichtung, zu halten, oder mit der Kalibriereinrichtung so zusammenzuwirken, dass die Kalibriereinrichtung zum Kalibrieren der Kraftmesseinrichtung verwendet werden kann. Insbesondere ist es möglich, dass die Kalibriereinrichtung so an der Probenaufnahme anordenbar ist, dass sie durch die Probenaufnahme abgestützt wird.

Vorzugsweise weist der Probenhalter drei Probenaufnahmen auf. Mittels der hier vorgeschlagenen Befestigungsanordnung können auch mehrere Proben - insbesondere parallel zueinander - reproduzierbar und lagegenau an der Kraftmesseinrichtung angeordnet und insbesondere gleichzeitig geprüft werden.

Gemäß der Erfindung ist vorgesehen, dass die wenigstens eine Probenaufnahme als Clipsaufnahme für einen medizinischen Hohlkörper ausgebildet ist. Auf diese Weise kann sehr einfach und schnell ein medizinischer Hohlkörper an oder in der Probenaufnahme - insbesondere durch Einclipsen - angeordnet werden. Eine solche Clipsaufnahme kann beispielsweise an eine Grundplatte des Probenhalters angeschraubt sein. Es ist aber auch eine andere kraft-, form- und/oder stoffschlüssige Verbindung möglich. Auch kann die Clipsaufnahme einstückig mit dem Probenhalter ausgebildet sein.

Alternativ oder zusätzlich ist die wenigstens eine Probenaufnahme als Widerlager für eine Kraftmessdose ausgebildet. Auf diese Weise kann eine Kraftmessdose als Kalibriereinrichtung an der Probenaufnahme abgestützt werden. Insbesondere wird zum Kalibrieren der Kraftmesseinrichtung bevorzugt wenigstens eine hochgenaue Kraftmessdose, deren Genauigkeit insbesondere höher ist als die Genauigkeit der Kraftmesseinrichtung, anstelle einer Probe an der Probenaufnahme angeordnet. Das Widerlager kann insbesondere als Aufschiebestift ausgebildet sein, auf den eine Kraftmessdose oder ein mit der Kraftmessdose verbundenes Steckelement aufsteckbar oder aufschiebbar ist.

Weist der Probenhalter eine Mehrzahl von Probenaufnahmen auf, sind diese bevorzugt jeweils relativ zueinander und relativ zu der Kraftmesseinrichtung ausgerichtet, insbesondere auf einer gleichen Höhe miteinander angeordnet. Auf diese Weise kann eine genaue, reproduzierbare Messung an allen Positionen der Probenaufnahmen gleichzeitig erfolgen.

Gemäß einer Weiterbildung der Erfindung ist vorgesehen, dass an dem Gegenhalter ein Auffangreservoir für Flüssigkeiten ausgebildet und/oder angeordnet ist. Dies ist insbesondere vorteilhaft bei der Prüfung vorgefüllter medizinischer Hohlkörper, um während der Prüfung, insbesondere wenn Fehler auftreten, oder wenn bestimmungsgemäß die Verlagerung eines Kolbens in dem medizinischen Hohlkörper bei geöffnetem medizinischen Hohlkörper geprüft wird, aus einem solchen medizinischen Hohlkörper austretende Flüssigkeit in dem Auffangreservoir aufzufangen.

Gemäß einer Weiterbildung der Erfindung ist vorgesehen, dass der Gegenhalter wenigstens zwei, vorzugsweise genau zwei, Probenhalteraufnahmen aufweist. Auf diese Weise können gleichzeitig zwei verschiedene Probenhalter oder ein Probenhalter und ein weiteres Element, an dem Gegenhalter befestigt werden. Die Probenhalteraufnahmen sind insbesondere relativ zueinander entlang zumindest einer Achse, insbesondere in Hochrichtung des Kraftmessturms, ausgerichtet. Vorzugsweise sind die Probenhalteraufnahmen senkrecht zu der Hochrichtung des Kraftmessturms versetzt zueinander angeordnet. Besonders bevorzugt sind die Probenhalteraufnahmen identisch zueinander ausgebildet. Dies bedingt eine besondere Einfachheit der Befestigungsanordnung einerseits in der Herstellung und andererseits in der Bedienung.

Gemäß einer Weiterbildung der Erfindung ist vorgesehen, dass die Befestigungsanordnung ein Widerlagerteil aufweist, das eingerichtet ist zur Befestigung an der wenigstens einen Probenhalteraufnahme des Gegenhalters. Das Widerlagerteil dient insbesondere zur Bereitstellung von Abstützkräften. Es weist bevorzugt die gleichen Befestigungselemente wie ein Probenhalter auf, insbesondere also die plane Anlagefläche, das wenigstens eine Positionierelement sowie das Fixierelement, sodass es anstelle eines Probenhalters an einer Probenhalteraufnahme angeordnet werden kann.

Das Widerlagerteil kann insbesondere dazu dienen, eine Probe - wie beispielsweise einen medizinischen Hohlkörper - während der Prüfung abzustützen, es kann aber auch dazu dienen, ein Widerlager für eine Kraftmessdose zur Kalibrierung bereitzustellen.

Vorzugsweise weist das Widerlagerteil wenigstens ein Widerlager oder eine Mehrzahl von Widerlagern, besonders bevorzugt drei Widerlager - insbesondere entsprechend der drei Probenaufnahmen des Probenhalters - auf.

Ist das Widerlagerteil vorgesehen, um wenigstens eine Probe, vorzugsweise drei Proben zu stützen, ist vorzugsweise in einer ersten, oberen Probenhalteraufnahme der Probenhalter angeordnet, wobei in einer zweiten, unteren Probenhalteraufnahme das Widerlagerteil angeordnet ist. Durch das Widerlagerteil können zur Prüfung in die Probe eingeleitete Druckkräfte abgestützt werden.

Ist das Widerlagerteil dagegen vorgesehen, wenigstens ein Widerlager für eine Kraftmessdose bereitzustellen, bleibt vorzugsweise eine der beiden Probenhalteraufnahmen des Gegenhalters leer, wobei das Widerlagerteil an der anderen Probenhalteraufnahme angeordnet wird. Insbesondere ist es möglich, dass das Widerlagerteil an einer unteren Probenhalteraufnahme der beiden Probenhalteraufnahmen angeordnet wird, während eine obere Probenhalteraufnahme leer bleibt.

Gemäß einer Weiterbildung der Erfindung ist vorgesehen, dass die wenigstens eine Clipsaufnahme gespritzt oder gedruckt ist. Insbesondere kann die Clipsaufnahme als Spritzgussteil, insbesondere als Einkomponenten- oder Mehrkomponenten-Spritzgussteil, gebildet sein. Die Clipsaufnahme kann aber auch mittels eines generativen Verfahrens, insbesondere eines 3D-Druckverfahrens, hergestellt sein. Vorzugsweise weist die Clipsaufnahme zumindest einen elastischen Bereich auf und/oder ist aus einem elastischen Material, insbesondere einem Kunststoff, gebildet, sodass eine Probe in einfacher Weise in die Clipsaufnahme einrastbar ist. Auf diese Weise kann die Clipsaufnahme einfach und kostengünstig hergestellt werden.

Vorzugsweise weist die Clipsaufnahme wenigstens einen Kunststoff auf oder besteht aus einem Kunststoff.

Alternativ oder zusätzlich ist der Probenhalter bevorzugt aus einem Metall oder einer Metalllegierung gebildet.

Gemäß einer Weiterbildung der Erfindung ist vorgesehen, dass die Anlagefläche an einer Anlageplatte ausgebildet ist, die an dem Probenhalter befestigt ist. Auf diese Weise kann die Anlagefläche besonders genau und besonders plan gefertigt sein, wobei die Anlageplatte hochgenau an dem Probenhalter angeordnet werden kann. Alternativ oder zusätzlich ist bevorzugt die Gegenanlagefläche an einer Gegenanlageplatte ausgebildet, die an dem Gegenhalter befestigt ist. Auf diese Weise kann die Gegenanlagefläche besonders plan und genau gebildet und in einfacher Weise an dem Gegenhalter befestigt sein.

Insbesondere ist es möglich, eine Anlageplatte und/oder eine Gegenanlageplatte als Präzisionsteile zu fertigen. Solche Platten können dann in einfacher, schneller und reproduzierbarer Weise mit dem Probenhalter und/oder dem Gegenhalter verschraubt oder in anderer Weise an diesem befestigt werden.

Die Aufgabe wird auch gelöst, indem eine Kraftmesseinrichtung geschaffen wird, die eine erfindungsgemäße Befestigungsanordnung oder eine Befestigungsanordnung nach einem der zuvor beschriebenen Ausführungsbeispiele aufweist. In Zusammenhang mit der Kraftmesseinrichtung ergeben sie insbesondere die Vorteile, die bereits in Zusammenhang mit der Befestigungsanordnung erläutert wurden.

Gemäß einer Weiterbildung der Erfindung ist vorgesehen, dass die Kraftmesseinrichtung eingerichtet ist zur Messung von Zug- und/oder Druckkräften an medizinischen Hohlkörpern.

Dabei verwirklichen sich in besonderer Weise - wie bereits erläutert - die hier beschriebenen Vorteile.

Die Aufgabe wird auch gelöst, indem ein Probenhalter geschaffen wird, der eine plane Anlagefläche, wenigstens ein Positionierelement und ein Fixierelement aufweist. Der Probenhalter ist dabei eingerichtet zur Verwendung als Probenhalter einer erfindungsgemäßen Befestigungsanordnung oder einer Befestigungsanordnung nach einem der zuvor beschriebenen Ausführungsbeispiele. In Zusammenhang mit dem Probenhalter ergeben sich insbesondere die Vorteile, die in Zusammenhang mit der Befestigungsanordnung erläutert wurden.

Die plane Anlagefläche ist insbesondere eingerichtet, um mit einer planen Gegenanlagefläche einer Probenhalteraufnahme der Befestigungsanordnung zusammenzuwirken. Das wenigstens eine Positionierelement ist eingerichtet, um mit einem Gegenpositionierelement der Probenhalteraufnahme zusammenzuwirken. Das Fixierelement ist vorzugsweise eingerichtet, um mit einem Gegenfixierelement der Probenhalteraufnahme zusammenzuwirken und dabei insbesondere den Probenhalter an dem Gegenhalter zu halten, sowie die Anlagefläche und die Gegenanlagefläche gegeneinander zu drängen.

Insbesondere ist der Probenhalter bevorzugt ausgestaltet, wie dies in Zusammenhang mit dem Probenhalter der erfindungsgemäßen Befestigungsanordnung oder einer Befestigungsanordnung nach einem der zuvor beschriebenen Ausführungsbeispiele erläutert ist.

Die Aufgabe wird auch gelöst, indem ein Gegenhalter geschaffen wird, der wenigstens eine Probenhalteraufnahme aufweist, wobei die Probenhalteraufnahme eine plane Gegenfläche, wenigstens ein Gegenpositionierelement und ein Gegenfixierelement aufweist. Der Gegenhalter ist eingerichtet zur Verwendung als Gegenhalter einer erfindungsgemäßen Befestigungsanordnung oder einer Befestigungsanordnung nach einem der zuvor beschriebenen Ausführungsbeispiele. In Zusammenhang mit dem Gegenhalter ergeben sich insbesondere die Vorteile, die in Zusammenhang mit der Befestigungsanordnung erläutert wurden.

Die plane Gegenanlagefläche ist insbesondere eingerichtet, um mit einer planen Anlagefläche eines Probenhalters der Befestigungsanordnung zusammenzuwirken. Das wenigstens eine Gegenpositionierelement ist insbesondere eingerichtet, um mit einem Positionierelement eines Probenhalters der Befestigungsanordnung zusammenzuwirken. Das Gegenfixierelement ist insbesondere eingerichtet, um mit einem Fixierelement eines Probenhalters der Befestigungsanordnung zusammenzuwirken, wobei das Fixierelement und das Gegenfixierelement insbesondere zusammenwirken, um den Probenhalter und den Gegenhalter aneinander zu halten sowie die Anlagefläche und die Gegenanlagefläche gegeneinander zu drängen.

Der Gegenhalter ist bevorzugt so ausgebildet, wie dies in Zusammenhang mit dem Gegenhalter der erfindungsgemäßen Befestigungsanordnung oder einer Befestigungsanordnung nach einem der zuvor beschriebenen Ausführungsbeispiele erläutert ist.

Die Erfindung wird im Folgenden anhand der Zeichnung näher erläutert. Dabei zeigen:
- Figur 1: eine Darstellung eines Ausführungsbeispiels einer Kraftmesseinrichtung mit einem Ausführungsbeispiel einer Befestigungsanordnung;
- Figur 2: eine Darstellung eines Gegenhalters der Befestigungsanordnung gemäß Figur 1;
- Figur 3: eine Darstellung eines Probenhalters der Befestigungsanordnung gemäß Figur 1;
- Figur 4: eine Schnittdarstellung des Probenhalters gemäß Figur 3;
- Figur 5: eine Darstellung eines Widerlagerteils der Befestigungsanordnung, und
- Figur 6: eine Darstellung eines weiteren, als Widerlager ausgebildete Probenaufnahmen aufweisenden Probenhalters der Befestigungsanordnung gemäß den Figuren 1 bis 5.

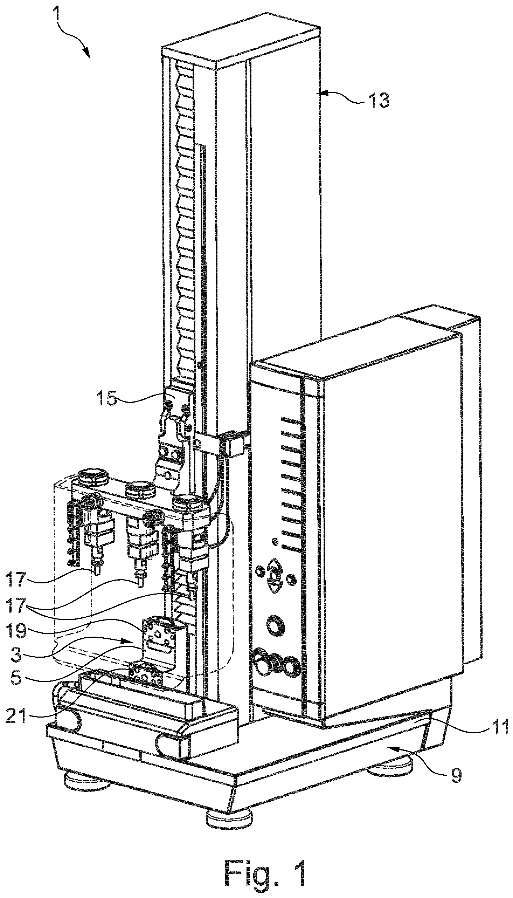

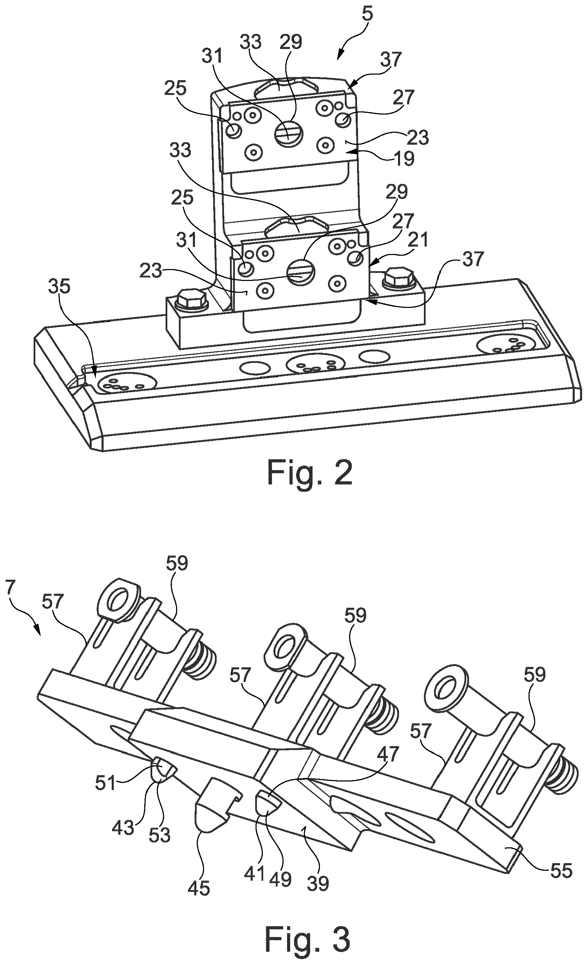

**Fig. 1** zeigt eine Darstellung eines Ausführungsbeispiels einer Kraftmesseinrichtung 1, die eine Befestigungsanordnung 3 aufweist, von der hier nur ein Gegenhalter 5 dargestellt ist, wobei die Befestigungsanordnung 3 zum Befestigen eines beispielsweise in Figur 3 dargestellten Probenhalters 7 dient. Der Gegenhalter 5 ist hier lagefest mit einem Basiskörper 9 verbunden, insbesondere lagefest auf einer Basisplatte 11 des Basiskörpers 9 angeordnet. Der Gegenhalter 5 kann beispielsweise mit der Basisplatte 11 verschraubt sein.

Ebenfalls lagefest und insbesondere relativ zu dem Gegenhalter 5 lagefest ausgerichtet ist an dem Basiskörper 9 und insbesondere auf der Basisplatte 11 ein Kraftmessturm 13 angeordnet, an dem ein Schlitten 15 in Hochrichtung des Kraftmessturms verlagerbar gehalten ist. Mit dem Schlitten 15 ist wenigstens ein Prüfelement, hier drei Prüfelemente 17, verbunden, die zur Zug- und/oder Druckprüfung einer an dem Probenhalter 7 angeordneten Probe, hier insbesondere drei solcher Proben, eingerichtet sind. Die Zug- und/oder Druckprüfung erfolgt in für sich genommen bekannter Weise insbesondere durch Verlagerung des Schlittens 15 an dem Kraftmessturm 13 in Hochrichtung.

**Fig. 2** zeigt eine Detaildarstellung des Gegenhalters 5 der Befestigungsanordnung 3. Der Gegenhalter 5 weist hier zwei Probenhalteraufnahmen auf, nämlich eine erste, obere Probenhalteraufnahme 19 und eine zweite, untere Probenhalteraufnahme 21. Die Probenhalteraufnahmen 19, 21 sind somit insbesondere in Hochrichtung relativ zueinander versetzt angeordnet. Zugleich sind sie bei dem hier dargestellten Ausführungsbeispiel senkrecht zu der Hochrichtung relativ zueinander versetzt. Im Übrigen sind die Probenhalteraufnahmen 19, 21 bevorzugt identisch ausgebildet.

Jede Probenhalteraufnahme 19, 21 weist eine plane Gegenanlagefläche 23 auf, sowie wenigstens ein Gegenpositionierelement, hier jeweils ein erstes Gegenpositionierelement 25 und ein zweites Gegenpositionierelement 27. Die Gegenpositionierelemente 25, 27 sind hier jeweils als Passbohrungen ausgebildet.

Die Probenhalteraufnahmen 19, 21 weisen außerdem jeweils ein Gegenfixierelement 29 auf. Bei dem hier dargestellten Ausführungsbeispiel sind die Gegenfixierelemente 29 als Rastaussparungen ausgebildet. In den Rastaussparungen 29 ist jeweils ein in eine in Figur 2 dargestellte Rastposition vorgespanntes Rastelement 31 angeordnet. Dieses ist entgegen der Vorspannung, in Figur 2 nach unten, aus der Rastposition in eine Löseposition, verlagerbar, insbesondere durch Betätigen eines Schiebers 33.

An dem Gegenhalter 5 ist ein Auffangreservoir 35 für Flüssigkeiten ausgebildet und/oder angeordnet.

Die Gegenanlageflächen 23 sind hier jeweils an einer Gegenanlageplatte 37 ausgebildet, wobei die Gegenanlageplatten 37 - hier durch Verschrauben - an dem Gegenhalter 5 befestigt sind.

**Fig. 3** zeigt den Probenhalter 7 der Befestigungsanordnung 3. Dieser ist eingerichtet, um an einer der Probenhalteraufnahmen 19, 21 befestigt, insbesondere fixiert zu werden.

Er weist eine plane Anlagefläche 39 auf, die eingerichtet ist, um mit der planen Gegenanlagefläche 23 zusammenzuwirken, insbesondere um in montiertem Zustand des Probenhalters 7 an der Probenhalteraufnahme 19, 21 vollflächig an der Gegenanlagefläche 23 anzuliegen.

Weiterhin weist der Probenhalter 7 wenigstens ein Positionierelement, hier zwei Positionierelemente, nämlich ein erstes Positionierelement 41 und ein zweites Positionierelement 43 auf. Außerdem weist der Probenhalter 7 ein Fixierelement 45 auf. Die Positionierelemente 41, 43 sind eingerichtet, um mit den Gegenpositionierelementen 25, 27 der Probenhalteraufnahmen 19, 21 zusammenzuwirken. Das Fixerelement 45 ist eingerichtet, um mit dem Gegenfixierelement 29 der Probenhalteraufnahme 19, 21 zusammenzuwirken, um den Probenhalter 7 an der Probenhalteraufnahme 19, 21 festzulegen.

Insbesondere sind die Positionierelemente 41, 43 und die Gegenpositionierelemente 25, 27 eingerichtet, um zusammen mit der Anlagefläche 39 und der Gegenanlagefläche 23 eine Relativposition zwischen dem Probenhalter 7 dem Gegenhalter 5 eindeutig festzulegen. Das Fixierelement 45 und das Gegenfixierelement 29 sind eingerichtet, um den Probenhalter 7 und den Gegenhalter 5 aneinander zu halten sowie die Anlagefläche 39 und die Gegenanlagefläche 23 gegeneinander zu drängen.

Bei dem hier dargestellten Ausführungsbeispiel sind die Positionierelemente 41, 43 jeweils als Passstifte ausgebildet, die eingerichtet sind, um in die Passbohrungen des Gegenhalters 5 einzugreifen. Dabei ist hier das erste Positionierelement 41 als Rundstift ausgebildet, wobei das zweite Positionierelement 43 als Schwertstift ausgebildet ist. Der Rundstift weist einen zylindrischen Schaft 47 und einem konischen Einführbereich 49 auf. Der Schwertstift weist einen in einer Richtung abgeflachten Schaft 51 und einen abgeschrägten, vorzugsweise konischen oder abgeschrägten Einführbereich 53 auf.

Das Fixierelement 45 ist mittig an dem Probenhalter 7 angeordnet. Die Positionierelemente 41, 43 sind außermittig, vorzugsweise aber auf einer selben Höhe und auf einer Linie mit dem Fixierelement 45 angeordnet.

Die Anlagefläche 39 ist hier einstückig mit einer Grundplatte 55 des Probenhalters 7 ausgebildet. Es ist alternativ aber auch möglich, dass die Anlagefläche 39 an einer Anlageplatte ausgebildet ist, die dann an dem Probenhalter 7 befestigt, vorzugsweise mit der Grundplatte 55 verschraubt, ist.

Der Probenhalter 7 weist wenigstens eine Probenaufnahme, hier drei Probenaufnahmen 57 auf. Die Probenaufnahmen 57 sind eingerichtet zur Aufnahme medizinischer Hohlkörper 59, die insbesondere als Spritzen oder als Karpulen ausgebildet sein können. Insbesondere sind die Probenaufnahmen 57 hier als Clipsaufnahmen für die medizinischen Hohlkörper 59 eingerichtet, wobei die medizinischen Hohlkörper 59 einfach in die Clipsaufnahmen eingeclipst werden können. Die Probenaufnahmen 57 sind vorzugsweise aus wenigstens einem Kunststoff gefertigt. Sie können durch Spritzgießen, insbesondere Kunststoffspritzgießen, oder durch ein generatives Fertigungsverfahren, insbesondere ein 3D-Druckverfahren, hergestellt sein.

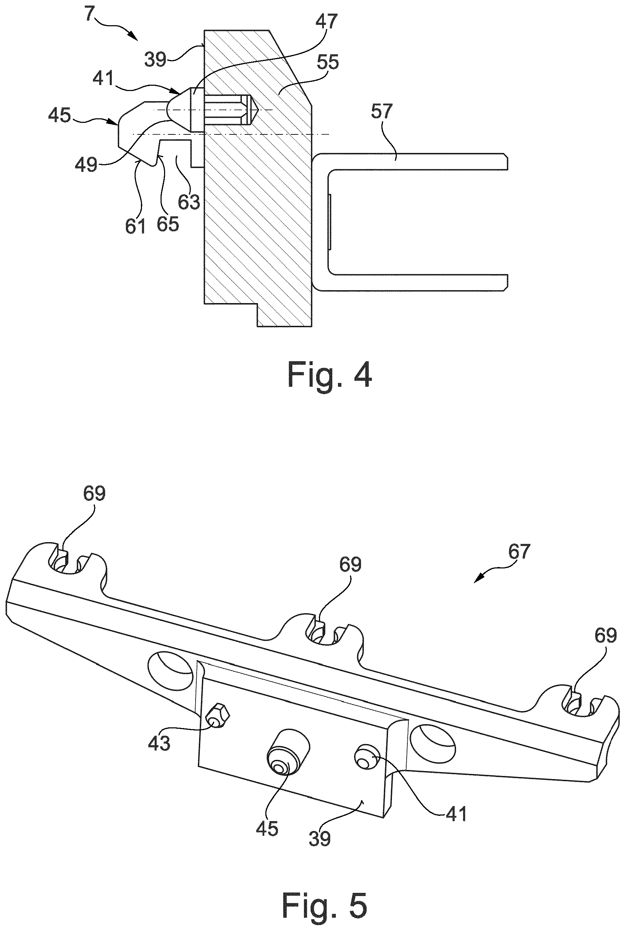

**Fig. 4** zeigt eine Schnittdarstellung des Probenhalters 7 entlang einer Querschnittsebene auf Höhe des als Rundstift ausgebildeten ersten Positionierelements 41.

Gleiche und funktionsgleiche Elemente sind grundsätzlich in allen Figuren mit gleichen Bezugszeichen versehen, sodass jeweils insoweit auf die vorangegangenen Beschreibungsteile verwiesen wird.

Anhand von Figur 4 wird insbesondere deutlich, dass das Fixierelement 45 als Zughaken ausgebildet ist. Es weist insbesondere eine Einführschräge 61 auf, vorzugsweise als Teil eines konischen Einführbereichs, wobei die Einführschräge 61 eingerichtet ist, um beim Einführen des Fixierelements 55 in die Rastaussparung des Gegenfixierelements 29 das Rastelement 31 entgegen der Vorspannung in seine Löseposition zu drängen. In Einführrichtung hinter der Einführschräge ist an dem Fixierelement 45 eine Verriegelungsausnehmung 63 ausgebildet, in die das Rastelement 31 nach Passieren der Einführschräge 61 einrastet, wobei es unter Vorspannung wieder in seine Rastposition gedrängt wird. Das Fixierelement 45 weist dabei in der Verriegelungsausnehmung 63 an einer der Einführschräge 61 zugewandten Seite eine Anlaufschräge 65 auf, an der das Rastelement 31 bei der Verlagerung in seine Rastposition abläuft, wobei es - im Sinne eines Keilgetriebes - das Fixierelement 45 weiter in die Rastaussparung des Gegenfixierelements 29 hinein und damit zugleich den Probenhalter 7 gegen den Gegenhalter 5 zieht. Somit werden auch die Anlagefläche 39 und die Gegenanlagefläche 23 dicht, vorzugsweise spaltfrei und vollflächig aneinandergedrängt.

**Fig. 5** zeigt ein Widerlagerteil 67, das eingerichtet ist zur Befestigung an einer der Probenhalteraufnahmen 19, 21 des Gegenhalters 5. Der Widerlagerteil 67 weist genau wie der Probenhalter 7 die plane Anlagefläche 39, die Positionierelemente 41, 43 und das Fixierelement 45 auf, und ist insofern identisch zu dem Probenhalter 7 eingerichtet, sodass insoweit auf dessen Beschreibung verwiesen wird. Insbesondere kann das Widerlagerteil 67 anstelle eines Probenhalters 7 an einer Probenhalteraufnahme 19, 21 des Gegenhalters 5 angeordnet werden. Vorzugsweise wird zur Prüfung medizinischer Hohlkörper 59 an der ersten, oberen Probenhalteraufnahme 19 des Gegenhalters 5 der Probenhalter 7 angeordnet, wobei an der zweiten, unteren Probenhalteraufnahme 21 das Widerlagerteil 67 angeordnet wird. Das Widerlagerteil 67 umfasst dabei Widerlager 69, die so eingerichtet und auf die medizinischen Hohlkörper 59 abgestimmt sind, dass diese bei einer Messung von Zug- und/oder Druckkräften an den medizinischen Hohlkörpern 59 durch die Kraftmesseinrichtung 1 in oder an dem Widerlager 69 abgestützt werden. Somit können die Zug- und/oder Druckkräfte an den medizinischen Hohlkörpern 59 besonders definiert und reproduzierbar gemessen werden.

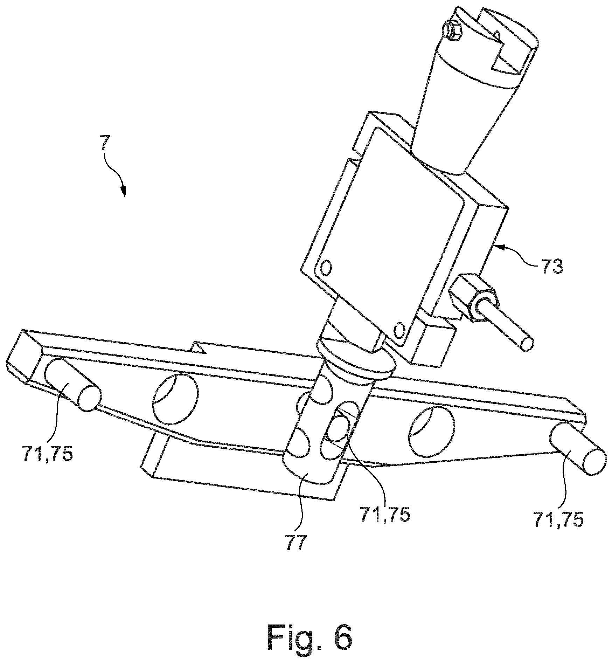

**Fig. 6** zeigt eine Darstellung eines anderen Ausführungsbeispiels eines Probenhalters 7, bei dem hier die wenigstens eine Probenaufnahme nicht als Aufnahme für einen medizinischen Hohlkörper 59, sondern vielmehr als Widerlager 71 für eine Kraftmessdose 73 ausgebildet ist. Dabei weist der Probenhalter 7 hier drei solche Widerlager 71 für drei Kraftmessdosen 73 auf, wobei jedoch der besseren Übersichtlichkeit wegen nur eine Kraftmessdose 73 dargestellt ist. Die Widerlager 71 für die Kraftmessdosen 73 sind hier als Aufschiebestifte 75 ausgebildet. Die Kraftmessdosen 73 können mit einem Aufschiebefortsatz 77, vorzugsweise formschlüssig, auf die Aufschiebestifte 75 aufgeschoben werden. Im Übrigen, insbesondere bezüglich der Befestigung des Probenhalters 7 an dem Gegenhalter 5, ist der hier dargestellte Probenhalter 7 identisch zu dem zuvor erläuterten Probenhalter 7, wir er insbesondere in den Figuren 3 und 4 dargestellt ist, ausgebildet. Er kann also insbesondere anstelle dieses Ausführungsbeispiels eines Probenhalters 7 an einer der Probenhalteraufnahmen 19, 21, insbesondere an der zweiten, unteren Probenhalteraufnahme 21 des Gegenhalters 5 befestigt werden. Wird der in Figur 6 dargestellte Probenhalter 7 an dem Gegenhalter 5 befestigt, insbesondere an der zweiten, unteren Probenhalteraufnahme 21, bleibt bevorzugt die erste, obere Probenhalteraufnahme 19 frei.

Die mit dem zweiten Ausgangsbeispiel eines Probenhalters 7 gemäß Figur 6 verbindbaren Kraftmessdosen 73 weisen vorzugsweise eine besonders hohe Genauigkeit für eine Kraftmessung auf, insbesondere eine höhere Genauigkeit als die standardmäßig zur Messung von Zug- und/oder Druckkräften der Kraftmesseinrichtung 1 verwendeten Messvorrichtungen. Somit ist es möglich, die Kraftmesseinrichtung 1 mittels des Probenhalters 7 gemäß Figur 6 und den Kraftmessdosen 73 zu kalibrieren. Die Kraftmessdosen 73 werden dabei quasi als Kalibrierproben verwendet.

Insgesamt zeigt sich, dass mit der hier vorgeschlagenen Befestigungsanordnung 3, dem Probenhalter 7 und dem Gegenhalter 5 eine hochgenaue, schnelle und reproduzierbare Befestigung von Proben/Kalibrierproben/Kalibriereinrichtungen und anderen Einrichtungen sowie auch ein schnelles Auswechseln derselben, insbesondere auch zwischen verschiedenen Arten von Proben, möglich ist.

## Patentansprüche

1. Befestigungsanordnung (3) zum Befestigen eines Probenhalters (7) an einer Kraftmesseinrichtung (1), mit
- einem Probenhalter (7), und
- einem kraftmesseinrichtungsseitigen Gegenhalter (5), der an der Kraftmesseinrichtung (1) ausgebildet oder angeordnet, oder fest mit der Kraftmesseinrichtung (1) verbindbar ist, wobei der Gegenhalter (5) wenigstens eine Probenhalteraufnahme (19,21) aufweist, wobei
- der Probenhalter (7) eine plane Anlagefläche (39) und die Probenhalteraufnahme (19,21) eine plane Gegenanlagefläche (23) aufweisen, wobei
- der Probenhalter (7) weiter wenigstens ein Positionierelement (41,43) und ein Fixierelement (45), und
- die Probenhalteraufnahme (19,21) wenigstens ein Gegenpositionierelement (25,27) und ein Gegenfixierelement (29) aufweisen, wobei
- das Positionierelement (41,43) und das Gegenpositionierelement (25,27) eingerichtet sind, um eine Relativposition zwischen dem Probenhalter (7) und dem Gegenhalter (5) zusammen mit der Anlagefläche (39) und der Gegenanlagefläche (23) eindeutig festzulegen, wobei
- das Fixierelement (45) und das Gegenfixierelement (29) eingerichtet sind, um den Probenhalter (7) und den Gegenhalter (5) aneinander zu halten sowie die Anlagefläche (39) und die Gegenanlagefläche (23) gegeneinander zu drängen, und wobei
- der Probenhalter (7) wenigstens eine Probenaufnahme (57) aufweist, **dadurch gekennzeichnet, dass**
- die wenigstens eine Probenaufnahme (57) als
(a) Clipsaufnahme für einen medizinischen Hohlkörper (59), oder
(b) Widerlager (71) für eine Kraftmessdose (73)
ausgebildet ist.

2. Befestigungsanordnung (3) nach Anspruch 1, **dadurch gekennzeichnet, dass** wenigstens ein Element, ausgewählt aus dem wenigstens einen Positionierelement (41,43) und dem wenigstens einen Gegenpositionierelement (25,27), als Passstift ausgebildet ist, wobei das andere Element, ausgewählt aus dem wenigstens einen Gegenpositionierelement (25,27) und dem wenigstens einen Positionierelement (41,43), als Passbohrung ausgebildet ist.

3. Befestigungsanordnung (3) nach einem der vorhergehenden Ansprüche, **dadurch gekennzeichnet, dass** der Probenhalter (7) als das wenigstens eine Positionierelement ein erstes Positionierelement (41) und ein zweites Positionierelement (43) aufweist, wobei der Gegenhalter (5) als das wenigstens eine Gegenpositionierelement ein erstes Gegenpositionierelement (25) und ein zweites Gegenpositionierelement (27) aufweist, wobei
a) das erste Positionierelement (41) als Rundstift, das zweite Positionierelement (43) als Schwertstift oder Flachstift, das erste Gegenpositionierelement (25) als Passbohrung, und das zweite Gegenpositionierelement (27) als Passbohrung, oder
b) das erste Positionierelement (41) als Rundstift, das zweite Positionierelement (43) als Passbohrung, das erste Gegenpositionierelement (25) als Passbohrung, und das zweite Gegenpositionierelement (27) als Schwertstift oder Flachstift, oder
c) das erste Positionierelement (41) als Passbohrung, das zweite Positionierelement (43) als Schwertstift oder Flachstift, das erste Gegenpositionierelement (25) als Rundstift, und das zweite Gegenpositionierelement (27) als Passbohrung, oder
d) das erste Positionierelement (41) als Passbohrung, das zweite Positionierelement (43) als Passbohrung, das erste Gegenpositionierelement (25) als Rundstift, und das zweite Gegenpositionierelement (27) als Schwertstift oder Flachstift
ausgebildet sind.

4. Befestigungsanordnung (3) nach einem der vorhergehenden Ansprüche, **dadurch gekennzeichnet, dass** ein Element, ausgewählt aus dem Fixierelement (45) und dem Gegenfixierelement (49), als Zughaken ausgebildet ist, wobei das andere Element, ausgewählt aus dem Gegenfixierelement (29) und dem Fixierelement (45), als Rastaussparung ausgebildet ist.

5. Befestigungsanordnung (3) nach Anspruch 4, **dadurch gekennzeichnet, dass** die Rastaussparung ein in eine Rastposition vorgespanntes Rastelement (31) aufweist.

6. Befestigungsanordnung (3) nach einem der vorhergehenden Ansprüche, **dadurch gekennzeichnet, dass** der Probenhalter (7) drei Probenaufnahmen (57) aufweist.

7. Befestigungsanordnung (3) nach einem der vorhergehenden Ansprüche, **dadurch gekennzeichnet, dass** an dem Gegenhalter (5) ein Auffangreservoir (35) für Flüssigkeiten ausgebildet und/oder angeordnet ist.

8. Befestigungsanordnung (3) nach einem der vorhergehenden Ansprüche, **dadurch gekennzeichnet, dass** der Gegenhalter (5) als die wenigstens eine Probenhalteraufnahme (19,21) zwei Probenhalteraufnahmen (19,21) aufweist.

9. Befestigungsanordnung (3) nach einem der vorhergehenden Ansprüche, **dadurch gekennzeichnet, dass** die Befestigungsanordnung (3) ein Widerlagerteil (67) aufweist, das eingerichtet ist zur Befestigung an der wenigstens einen Probenhalteraufnahme (19,21) des Gegenhalters (5).

10. Befestigungsanordnung (3) nach einem der vorhergehenden Ansprüche, **dadurch gekennzeichnet, dass** die wenigstens eine, als Clipsaufnahme ausgebildete Probenaufnahme (57) des Probenhalters (7) durch Spritzgießen oder durch ein generatives Fertigungsverfahren, insbesondere ein 3D-Druckverfahren, hergestellt ist.

11. Befestigungsanordnung (3) nach einem der vorhergehenden Ansprüche, **dadurch gekennzeichnet, dass** die Anlagefläche (39) an einer Anlageplatte ausgebildet ist, die an dem Probenhalter (7) befestigt ist, und/oder dass die Gegenanlagefläche (23) an einer Gegenanlageplatte (37) ausgebildet ist, die an dem Gegenhalter (5) befestigt ist.

12. Kraftmesseinrichtung (1), mit einer Befestigungsanordnung (3) nach einem der Ansprüche 1 bis 11.

13. Kraftmesseinrichtung (1) nach Anspruch 12, eingerichtet zur Messung von Zug- und/oder Druckkräften an medizinischen Hohlkörpern (59).

14. Probenhalter (7), mit einer planen Anlagefläche (39), wenigstens einem Positionierelement (41,43) und einem Fixierelement (45), wobei der Probenhalter (7) eingerichtet ist zur Verwendung als Probenhalter (7) einer Befestigungsanordnung (3) nach einem der Ansprüche 1 bis 11, wobei der Probenhalter (7) wenigstens eine Probenaufnahme (57) aufweist, und wobei die wenigstens eine Probenaufnahme (57) als Clipsaufnahme für einen medizinischen Hohlkörper (59) oder als Widerlager (71) für eine Kraftmessdose (73) ausgebildet ist.

15. Gegenhalter (5), mit wenigstens einer Probenhalteraufnahme (19,21), wobei die Probenhalteraufnahme (19,21) eine plane Gegenanlagefläche (23), wenigstens ein Gegenpositionierelement (25,27) und ein Gegenfixierelement (29) aufweist, und wobei der Gegenhalter (5) eingerichtet ist zur Verwendung als Gegenhalter (5) einer Befestigungsanordnung (3) nach einem der Ansprüche 1 bis 11.

## Claims

1. Fastening arrangement (3) for fastening a sample holder (7) to a force measuring device (1), having
- a sample holder (7), and
- a counterpart holder (5) on the force measuring device side, which is formed or arranged on the force measuring device (1) or is fixedly connectable to the force measuring device (1), wherein the counterpart holder (5) has at least one sample holder receptacle (19, 21), wherein
- the sample holder (7) has a planar abutment surface (39) and the sample holder receptacle (19, 21) has a planar counterpart abutment surface (23), wherein
- the sample holder (7) furthermore has at least one positioning element (41, 43) and one fixing element (45), and
- the sample holder receptacle (19, 21) has at least one counterpart positioning element (25, 27) and one counterpart fixing element (29), wherein
- the positioning element (41, 43) and the counterpart positioning element (25, 27) are configured to uniquely define a relative position between the sample holder (7) and the counterpart holder (5) together with the abutment surface (39) and the counterpart abutment surface (23), wherein
- the fixing element (45) and the counterpart fixing element (29) are configured to hold the sample holder (7) and the counterpart holder (5) against one another and to force the abutment surface (39) and the counterpart abutment surface (23) against one another, and wherein
- the sample holder (7) has at least one sample receptacle (57), **characterized in that**
- the at least one sample receptacle (57) is configured as
(a) a clip receptacle for a medical hollow body (59), or
(b) an abutment (71) for a load cell (73).

2. Fastening arrangement (3) according to claim 1, **characterized in that** at least one element selected from the at least one positioning element (41, 43) and the at least one counterpart positioning element (25, 27) is configured as a fitting pin, wherein the other element, which is selected from the at least one counterpart positioning element (25, 27) and the at least one positioning element (41, 43), is configured as a fitting bore.

3. Fastening arrangement (3) according to any of the preceding claims, **characterized in that** the sample holder (7) has a first positioning element (41) and a second positioning element (43) as the at least one positioning element, wherein the counterpart holder (5) as the at least one counterpart positioning element has a first counterpart positioning element (25) and a second counterpart positioning element (27), wherein
a) the first positioning element (41) is configured as a round pin, the second positioning element (43) as a diamond-shaped pin or flat pin, the first counterpart positioning element (25) as a fitting hole, and the second counterpart positioning element (27) as a fitting hole, or
b) the first positioning element (41) is configured as a round pin, the second positioning element (43) as a fitting bore, the first counterpart positioning element (25) as a fitting bore, and the second counterpart positioning element (27) as a diamond-shaped pin or flat pin, or
c) the first positioning element (41) is configured as a fitting bore, the second positioning element (43) as a diamond-shaped pin or flat pin, the first counterpart positioning element (25) as a round pin, and the second counterpart positioning element (27) as a fitting bore, or
d) the first positioning element (41) is configured as a fitting bore, the second positioning element (43) as a fitting bore, the first counterpart positioning element (25) as a round pin, and the second counterpart positioning element (27) as a diamond-shaped pin or flat pin.

4. Fastening arrangement (3) according to any of the preceding claims, **characterized in that** one element selected from the fixing element (45) and the counterpart fixing element (49) is configured as a draw hook, with the other element, which is selected from the counterpart fixing element (29) and the fixing element (45), is designed as a latching recess.

5. Fastening arrangement (3) according to claim 4, **characterized in that** the latching recess has a latching element (31) that is pretensioned into a latching position.

6. Fastening arrangement (3) according to any of the preceding claims, **characterized in that** the sample holder (7) has three sample receptacles (57).

7. Fastening arrangement (3) according to any of the preceding claims, **characterized in that** a collecting reservoir (35) for liquids is formed and/or arranged on the counterpart holder (5).

8. Fastening arrangement (3) according to any of the preceding claims, **characterized in that** the counterpart holder (5) has two sample holder receptacles (19, 21) as the at least one sample holder receptacle (19, 21).

9. Fastening arrangement (3) according to any of the preceding claims, **characterized in that** the fastening arrangement (3) has an abutment part (67) which is configured to be fastened to the at least one sample holder receptacle (19, 21) of the counterpart holder (5).

10. Fastening arrangement (3) according to any of the preceding claims, **characterized in that** the at least one sample receptacle (57) of the sample holder (7) that is configured as a clip receptacle is manufactured by injection molding or by a generative manufacturing process, in particular a 3D printing process.

11. Fastening arrangement (3) according to any of the preceding claims, **characterized in that** the abutment surface (39) is formed on an abutment plate which is fastened to the sample holder (7), and/or that the counterpart abutment surface (23) is formed on a counterpart abutment plate (37), which is fastened to the counterpart holder (5).

12. Force measuring device (1), having a fastening arrangement (3) according to any of claims 1 to 11.

13. Force measuring device (1) according to claim 12, configured to measure tensile and/or compressive forces on medical hollow bodies (59).

14. Sample holder (7), having a planar abutment surface (39), at least one positioning element (41, 43) and a fixing element (45), the sample holder (7) being configured for use as a sample holder (7) of a fastening arrangement (3) according to any of claims 1 to 11, wherein the sample holder (7) has at least one sample receptacle (57), and wherein the at least one sample receptacle (57) is configured as a clip receptacle for a medical hollow body (59) or an abutment (71) for a load cell (73).

15. Counterpart holder (5), with at least one sample holder receptacle (19, 21), the sample holder receptacle (19, 21) having a planar counterpart abutment surface (23), at least one counterpart positioning element (25, 27) and a counterpart fixing element (29), and wherein the counterpart holder (5) is configured for use as a counterpart holder (5) of a fastening arrangement (3) according to any of claims 1 to 11.

## Revendications

1. Dispositif de fixation (3) permettant de fixer un porte-échantillon (7) sur un dispositif de mesure de force (1), comprenant :
- un porte-échantillon (7), et
- un support homologue (5) situé côté dispositif de mesure de force et réalisé ou agencé sur le dispositif de mesure de force (1) ou pouvant être relié de manière fixe au dispositif de mesure de force (1), dans lequel le support homologue (5) présente au moins un dispositif d'accueil pour porte-échantillon (19, 21), dans lequel
- le porte-échantillon (7) présente une surface d'appui (39) plane et le dispositif d'accueil pour porte-échantillon (19, 21) présente une surface d'appui homologue (23) plane, dans lequel
- le porte-échantillon (7) présente en outre au moins un élément de positionnement (41, 43) et un élément d'immobilisation (45), et
- le dispositif d' accueil pour porte-échantillon (19, 21) présente au moins un élément de positionnement homologue (25, 27) et un élément d'immobilisation homologue (29), dans lequel
- l'élément de positionnement (41, 43) et l'élément de positionnement homologue (25, 27) sont conçus afin de définir de manière univoque une position relative entre le porte-échantillon (7) et le support homologue (5) en commun avec la surface d'appui (39) et la surface d'appui homologue (23), dans lequel
- l'élément d'immobilisation (45) et l'élément d'immobilisation homologue (29) sont conçus afin de maintenir le porte-échantillon (7) et le support homologue (5) l'un contre l'autre et afin de pousser la surface d'appui (39) et la surface d'appui homologue (23) l'une contre l'autre, et dans lequel
- le porte-échantillon (7) présente au moins un dispositif d'accueil pour échantillon (57), **caractérisé en ce que**
- le au moins un dispositif d'accueil pour échantillon (57) est réalisé sous forme de
(a) dispositif d'accueil pour clips destiné à un corps creux médical (59), ou
(b) culée (71) destinée à une boîte dynamométrique (73).

2. Dispositif de fixation (3) selon la revendication 1, **caractérisé en ce qu'**au moins un élément choisi parmi le au moins un élément de positionnement (41, 43) et le au moins un élément de positionnement homologue (25, 27) est réalisé sous la forme d'une goupille d'ajustage, et l'autre élément choisi parmi le au moins un élément de positionnement homologue (25, 27) et le au moins un élément de positionnement (41, 43) est réalisé sous la forme d'un trou d'ajustage.

3. Dispositif de fixation (3) selon l'une quelconque des revendications précédentes, **caractérisé en ce que** le porte-échantillon (7), en tant qu'au moins un élément de positionnement, présente un premier élément de positionnement (41) et un second élément de positionnement (43), et le support homologue (5), en tant qu'au moins un élément de positionnement homologue, présente un premier élément de positionnement homologue (25) et un second élément de positionnement homologue (27), dans lequel
a) le premier élément de positionnement (41) est réalisé sous forme de goupille ronde, le second élément de positionnement (43) est réalisé sous forme de goupille longue ou de goupille plate, le premier élément de positionnement homologue (25) est réalisé sous forme de trou d'ajustage, et le second élément de positionnement homologue (27) est réalisé sous forme de trou d'ajustage, ou
b) le premier élément de positionnement (41) est réalisé sous forme de goupille ronde, le second élément de positionnement (43) est réalisé sous forme de trou d'ajustage, le premier élément de positionnement homologue (25) est réalisé sous forme de trou d'ajustage, et le second élément de positionnement homologue (27) est réalisé sous forme de goupille longue ou de goupille plate, ou
c) le premier élément de positionnement (41) est réalisé sous forme de trou d'ajustage, le second élément de positionnement (43) est réalisé sous forme de goupille longue ou de goupille plate, le premier élément de positionnement homologue (25) est réalisé sous forme de goupille ronde, et le second élément de positionnement homologue (27) est réalisé sous forme de trou d'ajustage, ou
d) le premier élément de positionnement (41) est réalisé sous forme de trou d'ajustage, le second élément de positionnement (43) est réalisé sous forme de trou d'ajustage, le premier élément de positionnement homologue (25) est réalisé sous forme de goupille ronde et le second élément de positionnement homologue (27) est réalisé sous forme de goupille longue ou de goupille plate.

4. Dispositif de fixation (3) selon l'une quelconque des revendications précédentes, **caractérisé en ce qu'**un élément choisi parmi l'élément d'immobilisation (45) et l'élément d'immobilisation homologue (49) est réalisé sous forme de crochet, et l'autre élément choisi parmi l'élément d'immobilisation homologue (29) et l'élément d'immobilisation (45) est réalisé sous forme d'évidement d'accrochage.

5. Dispositif de fixation (3) selon la revendication 4, **caractérisé en ce que** l'évidement d'accrochage présente un élément d'accrochage (31) précontraint dans une position d'accrochage.

6. Dispositif de fixation (3) selon l'une quelconque des revendications précédentes, **caractérisé en ce que** le porte-échantillon (7) présente trois dispositifs d'accueil pour échantillon (57).

7. Dispositif de fixation (3) selon l'une quelconque des revendications précédentes, **caractérisé en ce qu'**un réservoir de collecte (35) destiné à du liquide est réalisé et/ou est agencé au niveau du support homologue (5).

8. Dispositif de fixation (3) selon l'une quelconque des revendications précédentes, **caractérisé en ce que** le support homologue (5), en tant qu'au moins un dispositif d'accueil pour porte-échantillon (19, 21), présente deux dispositifs d'accueil pour porte-échantillon (19, 21).

9. Dispositif de fixation (3) selon l'une quelconque des revendications précédentes, **caractérisé en ce que** le dispositif de fixation (3) présente une partie formant culée (67) conçue afin d'être fixée au niveau du au moins un dispositif d'accueil pour porte-échantillon (19, 21) du support homologue (5).

10. Dispositif de fixation (3) selon l'une quelconque des revendications précédentes, **caractérisé en ce que** le au moins un dispositif d' accueil pour échantillon (57), réalisé sous forme de dispositif d'accueil pour clips, du porte-échantillon (7) est fabriqué par moulage par injection ou grâce à un procédé de fabrication générative, en particulier un procédé d'impression 3D.

11. Dispositif de fixation (3) selon l'une quelconque des revendications précédentes, **caractérisé en ce que** la surface d'appui (39) est réalisée au niveau d'une plaque d'appui qui est fixée sur le porte-échantillon (7) et/ou **en ce que** la surface d'appui homologue (23) est réalisée au niveau d'une plaque d'appui homologue (37) qui est fixée sur le support homologue (5).

12. Dispositif de mesure de force (1), comprenant un dispositif de fixation (3) selon l'une quelconque des revendications 1 à 11.

13. Dispositif de mesure de force (1) selon la revendication 12, conçu afin de mesurer des forces de traction et/ou de compression au niveau de corps creux médicaux (59).

14. Porte-échantillon (7), comprenant une surface d'appui (39) plane, au moins un élément de positionnement (41, 43) et un élément d'immobilisation (45), dans lequel le porte-échantillon (7) est conçu afin d'être utilisé en tant que porte-échantillon (7) d'un dispositif de fixation (3) selon l'une quelconque des revendications 1 à 11, dans lequel le porte-échantillon (7) présente au moins un dispositif d'accueil pour échantillon (57), et dans lequel le au moins un dispositif d'accueil pour échantillon (57) est réalisé sous forme de dispositif d'accueil pour clips destiné à un corps creux médical (59) ou sous forme de culée (71) destinée à une boîte dynamométrique (73).

15. Support homologue (5), comprenant au moins un dispositif d'accueil pour porte-échantillon (19, 21), dans lequel le dispositif d'accueil pour porte-échantillon (19, 21) présente une surface d'appui homologue (23) plane, au moins un élément de positionnement homologue (25, 27) et un élément d'immobilisation homologue (29), et dans lequel le support homologue (5) est conçu afin d'être utilisé comme support homologue (5) d'un dispositif de fixation (3) selon l'une quelconque des revendications 1 à 11.
